(19) Europäisches Patentamt / European Patent Office / Office européen des brevets

(11) **EP 4 399 584 B1**

(12) **EUROPEAN PATENT SPECIFICATION**

(45) Date of publication and mention of the grant of the patent:
**09.07.2025 Bulletin 2025/28**

(21) Application number: **22765719.4**

(22) Date of filing: **16.08.2022**

(51) International Patent Classification (IPC):
***G05D 11/13*** (2006.01)

(52) Cooperative Patent Classification (CPC):
**G05D 11/134**

(86) International application number:
**PCT/US2022/075012**

(87) International publication number:
**WO 2023/039334 (16.03.2023 Gazette 2023/11)**

(54) **SYSTEMS AND METHODS FOR MEASURING POLYMER ADDITIVE DISPENSATION**

SYSTEME UND VERFAHREN ZUR MESSUNG DER ABGABE VON POLYMERADDITIVEN

SYSTÈMES ET PROCÉDÉS DE MESURE DE DISTRIBUTION D'ADDITIF POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2021 US 202163261047 P**

(43) Date of publication of application:
**17.07.2024 Bulletin 2024/29**

(73) Proprietor: **ExxonMobil Chemical Patents Inc.**
**Baytown, TX 77520 (US)**

(72) Inventors:
• **SIMONSEN, Bobi, A.**
**Houston, TX 77006 (US)**
• **CUTTING, Richard, P.**
**Baytown, TX 77521 (US)**

• **WILLIAMS, James, T.**
**Houston, TX 77044 (US)**
• **GUY, Nathan, B.**
**Sewickely, PA 15143 (US)**

(74) Representative: **ExxonMobil Petroleum & Chemical BV**
**IP Law Europe**
**Hermeslaan 2**
**1831 Machelen (BE)**

(56) References cited:
**US-A- 4 667 503     US-A- 5 775 532**

• **"Extrusion: The Definitive Processing Guide and Handbook", 1 January 2005, WILLIAM ANDREW, INC, article HAROLD F. GILES ET AL: "Extruder Temperatures Profiles", pages: 65 - 73, XP055467332**

Description

## CROSS REFERENCE TO RELATED APPLICATION

This application claims the benefit of U.S. Provisional Application 63/261,047 filed September 9, 2021, entitled "Apparatus and System For Swing Adsorption Processes Related Thereto".

## FIELD OF THE INVENTION

The presently disclosed subject matter relates to methods and systems for producing polymer product compositions including additives.

## BACKGROUND OF THE INVENTION

Processes for compounding polymers and additives often involve gravimetric dosing that enables calculation of the amount of material used. in addition to the ability to monitor product composition and component proportions at various stages of the production cycle. Gravimetric (or loss-in-weight) feeders can be used in continuous or batch operations to dispense bulk solids and/or liquids. As materials pass through a gravimetric feeder, changes in the weight of the system are used to determine the amount and rate of material fed over time. By monitoring the overall weight of the device. material variations in bulk density. particle size, and rheology have little impact on the accuracy of dispensing amounts.

Gravimetric feeders often rely on a control system that adjusts the speed and/or timing of the feeder based on recorded weights. However, control systems measurements may be subject to a number of potential errors that may be associated with dispensing while filling. calibration error, weigh cell drift with changing ambient conditions, vibrations, and the like. Errors in the measurement of polymer and additives can negatively affect dosage amount and rate information. which can lead to product quality issues downstream.

Some references of potential interest in this area include: US 4,443,995: US 2004/0002789; EP 1327867: CN102861529, WO 2010/40615: CN109733831; CN109462217: and WO 2007/104827. US4667503A is another piece of relevant prior art.

## SUMMARY OF THE INVENTION

In an aspect, methods disclosed herein include dispensing an additive from a secondary feeder to a primary feeder; dispensing the additive from the primary feeder to a mixing device: obtaining a primary measurement from the primary feeder feeding the mixing device, wherein the primary measurement is a total weight of additive fed from the primary feeder over a time interval: obtaining a secondary measurement from the secondary feeder that feeds the primary feeder, wherein the secondary measurement is a total weight of additive fed from the secondary feeder over the time interval; comparing the primary measurement and the secondary measurement: and (i) when the difference between the primary measurement and the secondary measurement is less than a selected threshold, continuing either or both of (i-a) dispensing the additive from the primary feeder to the mixing device and (i-b) dispensing the additive from the secondary feeder to the primary feeder; or (ii) when the difference between the primary measurement and the secondary measurement is greater than the selected threshold, halting either or both of (ii-a) dispensing the additive from the primary feeder to the mixing device and (ii-b) dispensing the additive from the secondary feeder to the primary feeder. and further recalibrating at least one of the primary feeder or the secondary feeder.

In another aspect, additive feed systems for dispensing an additive to a mixing device disclosed herein may include: a primary feeder configured to feed the mixing device; a secondary feeder configured to feed the primary feeder: a feed controller configured to control and monitor the additive feed system by: obtaining a primary measurement from the primary feeder; obtaining a secondary measurement from the secondary feeder: comparing the primary measurement and the secondary measurement: and (i) continuing dispensing the additive when the difference between the primary measurement and the secondary measurement is less than a selected threshold or (ii) halting dispensing the additive and recalibrating at least one of the primary feeder or the secondary feeder when the difference between the primary measurement and the secondary measurement is greater than the selected threshold.

## BRIEF DESCRIPTION OF THE DRAWINGS

FIG. 1 is a schematic diagram showing an arrangement of gravimetric feeders in accordance with the present disclosure.

FIG. 2 is a flowchart depicting a measurement technique in accordance with an embodiment of the present disclosure.

FIG. 3 is a graphical depiction showing the mass in a secondary feeder as a function of time during a compounding process.

FIG. 4 is a graphical depiction showing the fluctuation in measured mass in a secondary feeder as a function of time while on standby.

FIG. 5 is a graphical depiction showing an instantaneous mass determination in a secondary feeder as a function of time during a compounding process.

## DETAILED DESCRIPTION OF THE INVENTION

The present disclosure is directed to measurement techniques for use in compounding processes utilizing secondary measurements from an upstream feeder to monitor the performance of a primary feeder. Particularly, methods disclosed herein include monitoring the weight reduction of a secondary feeder by summing instantaneous weigh cell measurements during dispensation, and using the calculated weight reduction to detect weighing errors and variances at the primary feeder.

Compounding processes may incorporate one or more gravimetric feeders to dispense polymer and additives, and may be configured to dispense solids and/or liquids in continuous or batch operations. Gravimetric feeders for bulk materials may include a number of components such as storage tanks; controlled feeding devices such as augers, chutes, valves, slide gate valves, or pumps; scales or weigh cells; feeder controllers; and optionally agitators to facilitate material dispensation. In some cases, multiple feeders may be arranged in series and accuracy may be monitored by comparing the calculated material weights at each feeder.

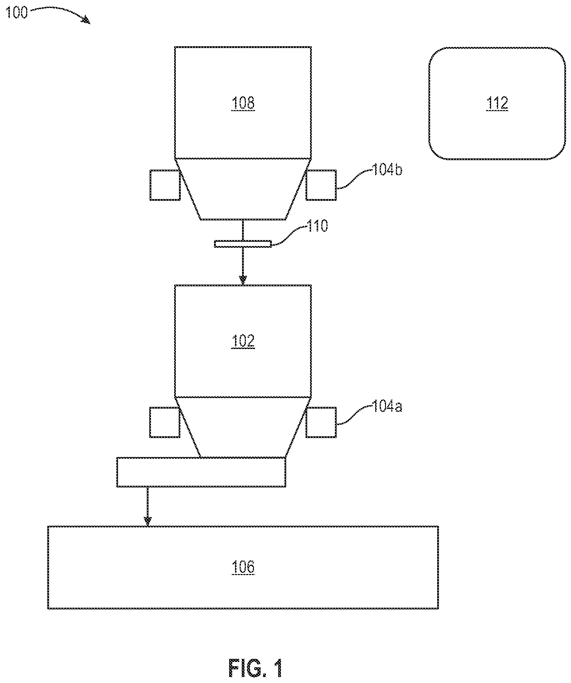

FIG. 1 provides an example of an additive feed system **100** for providing an additive to a compounding process, such as the mixture of an additive feed with one or more components such as a polymer resin, and/or other process additives. While the example provided is configured for the provision of a single additive, additive feed system **100** may incorporate multiple primary feeders for each respective additive required for a compounding formulation (and each primary feeder may feed a secondary feeder such as secondary feeder 106, described in more detail below). Alternatively, the primary feeder may intake multiple additives (pre-mixed and fed together, or fed separately into the primary feeder for combination and feeding).

Returning to FIG. 1, primary feeder **102** is a gravimetric feeder that is equipped with one or more weigh cells **104a** capable of continuous or instantaneous calculation of the weight of the additive within the hopper to ensure proper additives concentrations are achieved. Primary feeder **102** dispenses additive from a feeding device to mixing point 106, which may be a mixing device such as an extruder, shear or batch mixer, blender and the like, that combines the additive feed with other components to form a product composition. As noted, the other components mixed in the mixing point **106** with the additive feed may include other additives and/or a polymer resin. Although the systems and methods described in connection with FIG. 1 and elsewhere herein can be used for many different types of additives fed to many different types of other components, in particular embodiments, the other components comprise a polymer resin. such that the process entails mixing the additive feed from primary feeder. In certain embodiments, the polymer resin comprises polyethylene. such as the reactor product of a polymerization of ethylene and optionally one or more comonomers (e.g., $C_3$ to $C_{12}$ $\alpha$-olefins, such as 1-butene, 1-hexene, and/or 1-octene). This reactor product may be in the form of polymer (polyethylene) granules, and the mixing device may be operated as part of a polymer finishing process, wherein the product composition is pelletized and formed into polymer product pellets according to any suitable method known in the art for finishing polymers (not shown in FIG. 1).

As additive is depleted from primary feeder 102, additional additive may be provided from a secondary feeder 108. Secondary feeder 108 is shown as a second gravimetric feeder, but may be a larger vessel, tank, silo, and the like. In some cases, secondary feeder 108 may be a gravimetric feeder capable of holding about 450 lb to about 600 lb or more of additive. In more general terms, secondary feeder **108** may be a longer-term storage tank and/or feeder capable of holding more (in terms of weight or volume) additive than primary feeder **102** (e.g.. at least 2, 3, or 4 times more). Thus, in some embodiments, secondary feeder **108** may alternatively be referred to as a "day tank," e.g., such that a day's worth of additive may be supplied to the secondary feeder 108 (a day meaning a 24-hour period in such instances). Secondary feeder **108** may also include one or more weigh cells **104b** for monitoring the amount and flow of additive to primary feeder **102.** Secondary feeder 108 includes a feeding mechanism **110,** such as a slide gate valve, that controls addition to primary feeder **102**. During compounding processes, the provision of additives according to the system 100 may be controlled by a feed controller **112** that calculates the additive feed and throughput based on a number of values, such as weights calculated by weigh cells **104a, 104b,** and accordingly adjusts the feed mechanisms of the primary feeder **102** and/or the secondary feeder **108**. For example. the total amount of additive dispensed into a product may be calculated according to Eq. **1.**

$$\text{Total additive concentration (ppm)} = \text{weight loss of feeder/total product composition weight}$$

$$\text{(Eq. 1)}$$

The weight loss may be determined for either or both of the primary feeder **102** and/or the secondary feeder **108,** and both values may be used to calculate the amounts of additive dispensed to mixing point **106** over time. While primary measurements may be satisfactory for a number of applications, a number of environmental and mechanical variables can create measurement errors in the primary measurements that affect product quality downstream; and in some applications with tight tolerances for additive concentration, even relatively small measurement errors can create significant problems in quality of the product composition. This is particularly true, *e.g.,* in the case of mixing additives with polymer resin. such as polyethylene.

Methods in accordance with the present disclosure involve measuring values of the additive feed system at multiple points (*e.g.,* at both the primary and secondary feeders, such as using weigh cells **104a** and **104b** for the respective primary and secondary feeders) and comparing the measured values for consistency and accuracy. As used herein, weight change per unit time measured in the primary feeder (e.g.. using weigh cells **104a)** are referred to as "primary measurements" (e.g., lb/hr), and weight change per unit time measured in the secondary feeder (e.g., using weigh cells 104b) are referred to as "secondary measurements." Secondary measurements may be useful. for example, to verify a primary measurement for an additive dispenser and function as an additional quality control for the amount of additive being dispensed into downstream processes. Secondary measurements are performed independent of the primary measurement and primary dispensing apparatus.

Because the primary measurements and secondary measurements should correlate or be identical (within a margin of error), increasing deviations between the values (increasing percent difference) may indicate measurement errors stemming from calibration drift, feeding issues, mechanical failure. and other sources. in at least one of the primary feeder or the secondary feeder. Over time, measurement errors may indicate the amount of additive being dispensed is different than expected, which can negatively impact the quality and consistency of the compounded product.

The difference in the primary and secondary measurements may indicate a need for operation intervention. In some cases. the percent difference of the primary and secondary measurements may be monitored and, upon exceeding a selected threshold (e.g., a percent difference greater than about 5%, about 10%, about 15% etc.), the additive feed system may be paused or modified to address the discrepancy. such as by recalibration or repair of the gravimetric feeders. As used herein. a "selected threshold" simply refers to a threshold value that can be determined in the context appropriate to the process in which the additive is being dispensed. It can be selected in the sense of being set (like a set-point value) by a user or operator (e.g., a user-defined threshold): it can be automatically determined by process control logic (pre-programmed and/or programmed to reference the process conditions in which a controller is deployed); or determined by any other suitable means as with any set point for a chemical process. with which the skilled artisan will be well familiar. Further, "recalibration" can generally be used to refer to calibration or repair of either feeder itself. or recalibration or repair of the weigh cell or other measurement device used for obtaining the primary and/or secondary measurements, or to any combination of the foregoing.

However, when comparing secondary measurements to primary measurements. it may be the case that further discrepancies need to be taken into account. For instance, when a secondary measurement is taken from a secondary feeder that is used as, e.g., a day tank or other longer-term (and, optionally, larger, as noted above) storage of an additive, change in weight in the secondary feeder could occur due to reasons other than transfer to the primary feeder throughout the day (or other longer-term time period). Accordingly, another aspect of the present disclosure includes calculating the weight loss in a secondary feeder using instantaneous weight measurements during additive feeding *(i.e.,* during only time period(s) in which additive is transferred from the secondary feeder to the primary feeder), so as to minimize or eliminate systematic errors associated with continuous methods of gravimetric (loss-in-weight) measurements. For example, as noted, weight measurements for secondary feeders. particularly high capacity secondary feeders. can vary significantly with changes in ambient conditions (*e.g.*, temperature, atmospheric pressure, wind, and the like). In such instances, using loss in weight in the secondary feeder as a proxy for amount of material (such as additive) transferred to the primary feeder could introduce errors.

Thus, methods disclosed herein may utilize instantaneous weight measurement that records secondary measurements only when there is a mass transfer between the secondary feeder to the primary feeder, and ignores weight fluctuations during periods in which the secondary feeder is idle (not feeding). The instantaneous measurements are then summed for the time interval used, for comparison against the primary measurement. The sum is the secondary measurement that represents the weight loss of the secondary feeder over the time interval, which may then be compared with the primary measurement for consistency. Each "instantaneous measurement" as referenced above may be described more specifically as obtaining the secondary measurement at time $T_1$ (corresponding to the beginning of dispensing a lot, or portion, of additive from secondary feeder to primary feeder) and also at time $T_2$ (corresponding to the end of the transfer of said lot, or portion, of the additive from secondary feeder to primary feeder), such that the difference in

weight from $T_1$ to $T_2$ (that is, [weight at $T_2$] - [weight at $T_1$]) indicates the amount of the lot, or portion, of additive dispensed from secondary to primary feeder. Such lot dispensations may take place over a range of time periods ($T_2 - T_1$) depending upon the process in which the additive is being dispensed; for instance the time period ($T_2 - T_1$) for instantaneous measurement may be as little as 1s, 5s. 10s, 15s, 30s. or 1 minute, or it may be longer, such as about 2, 3, 4, 5, or 10 minutes, although it should be understood that other longer or shorter time limits may be appropriate in different contexts, and the concept of the instantaneous measurement described herein can be equally applied to different dispensation times. And, as also noted. multiple such transfers may take place over the time interval of interest (e.g., multiple lots of additive may be transferred throughout a time interval of 1 hour, or 12 hours, or 24 hours); such that a plurality of these instantaneous measurements may be taken through the day. The plurality of instantaneous measurements taken over the time interval (e.g., 1 hour, 12 hours, 24 hours. or other time interval over which multiple lot, or portion, transfers take place from secondary to primary feeder) are summed together. Then, the weight difference recorded in the primary feeder over the same time interval can be compared against the sum of the plurality of instantaneous measurements of the secondary feeder (that is, the sum of the plurality of instantaneous secondary measurements).

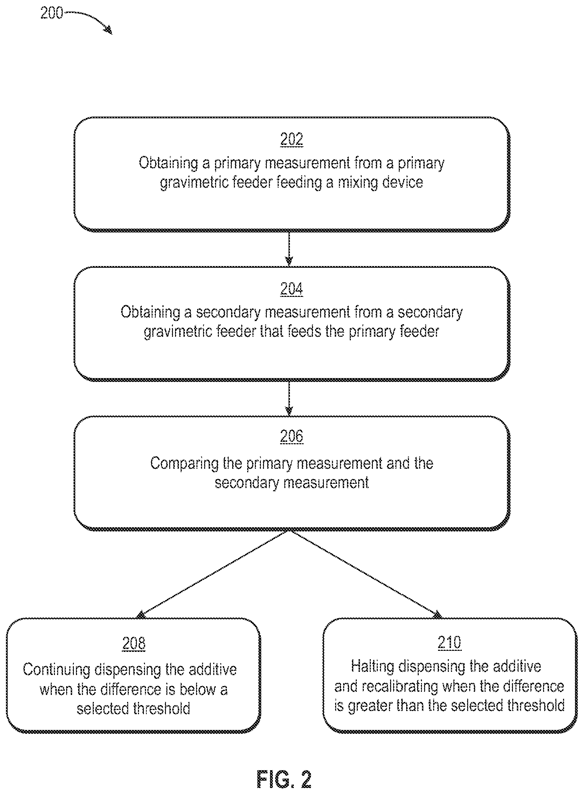

A method **200** for measuring amounts of additive fed through an additive feed system is shown in the flowchart depicted in FIG. 2. Method **200** may begin at **202** by obtaining a primary measurement from a primary feeder (such as primary feeder **102** in FIG. 1) as additive is fed to a mixing device. As the additive in the primary feeder is depleted, primary feeder is fed using a secondary feeder (such as secondary feeder **108** in FIG. 1). As secondary feeder dispenses the additive to the primary feeder, a secondary measurement is obtained from the secondary feeder at **204.** As discussed above the secondary measurement may be obtained by summing a plurality of instantaneous measurements from the secondary feeder (a plurality of instantaneous secondary measurements) each taken only during time periods of actively dispensing the additive from the secondary to the primary feeder, in order to determine a total weight loss in the secondary feeder over the time interval that is attributable to transferred additive, while excluding potential weight fluctuations in the secondary feeder due to other causes.

At **206.** the calculated weights for the primary measurement and the secondary measurement are compared. Comparison may include determining whether the calculated difference between the measurements is above or below a selected threshold, which may prompt a user or automated process to perform certain actions. For example, a user may be a plant operator: and an automated process may be embodied by a controller programmed with logic such that the controller is operable to compare primary and secondary measurements and, based upon the comparison, effectuate process control actions such as increasing, decreasing, starting, or stopping additive feed and/or polymer or other component feed to the mixing point. Other examples of control actions include starting, stopping. or changing process conditions (e.g., rotational speed, temperature, and the like) of the mixing point, particularly where the mixing point is a stirred tank, extruder, or the like. Such control methods of feeders. mixing points, and other equipment are well known in the art, so details of such control mechanisms are not discussed further herein. Returning to examples of utilizing the comparison, in instances where the calculated difference between the primary measurement and secondary measurement are below the user-defined threshold (e.g., a threshold of 15%, or 10%, such as 5%. or 1%, depending on desired error tolerance). a user or automated process may continue operation of the additive feed system at **208.** In instances in which the calculated difference is greater than the selected threshold, a user or automated process may modify the performance of the additive feed system at **210,** including halting the system, performing remedial measures. modifying feed rates, and/or recalibrating the primary feeder and/or the secondary feeder.

The methods are discussed in terms of primary and secondary measurements. however, it is envisioned that similar methods of error detection may be expanded to additive feed systems having more than two gravimetric feeders. Measurement error in the primary feeder and/or secondary feeder may be detected by variance with weight measurements at other positions in the additive feed system, *e.g.,* a tertiary feeder, quaternary feeder, *etc.* For example, primary and/or secondary measurements may be compared against tertiary measurements obtained at feedbins equipped with load cells that reside upstream of the secondary measurements.

Methods disclosed herein may also be applied to other feeder systems, including feeders for polymer resins and other components in a polymer compounding process. In another aspect, methods may include detecting measurement errors associated with production rate calculations for a compounded resin product. During processing. polymer resin is added into the extruder barrel, processed (which may include the incorporation additives or other resins), and extruded through the die in various product forms (e.g., pellets, strands, films) into a product silo. In this extended example, the weight loss in load cells equipped to the feedbin for the initial polymer resin (a primary measurement) may be used to determine the total feed and/or production rate of the particular product. The total feed and/or production rate may be then be compared with the weight recorded (by load cells or similar) in the downstream product silo (a secondary measurement). Similar to the above primary and secondary measurements in the additive feed system, the weight of polymer resin input into the process and the weight of the product exiting the process should be identical or correlate within a margin of error, and thus deviations (increasing percent difference) may indicate a calibration issue. This process may also utilize a tertiary measurement. such as a rail car weight measurement downstream of the product silo, as a check against the primary and/or secondary measurement.

Embodiments disclosed herein include:

A. Methods of dispensing an additive, comprising: dispensing an additive from a secondary feeder to a primary feeder; dispensing the additive from the primary feeder to a mixing device; obtaining a primary measurement from the primary feeder feeding the mixing device, wherein the primary measurement is a total weight of additive fed from the primary feeder over a time interval; obtaining a secondary measurement from the secondary feeder that feeds the primary feeder, wherein the secondary measurement is a total weight of additive fed from the secondary feeder over the time interval; comparing the primary measurement and the secondary measurement; and (i) when the difference between the primary measurement and the secondary measurement is less than a selected threshold, continuing either or both of (i-a) dispensing the additive from the primary feeder to the mixing device and (i-b) dispensing the additive from the secondary feeder to the primary feeder; or (ii) when the difference between the primary measurement and the secondary measurement is greater than the selected threshold, halting either or both of (ii-a) dispensing the additive from the primary feeder to the mixing device and (ii-b) dispensing the additive from the secondary feeder to the primary feeder. and further recalibrating at least one of the primary feeder or the secondary feeder.

B. Additive feed systems for dispensing an additive to a mixing device, comprising: a primary feeder configured to feed the mixing device; a secondary feeder configured to feed the primary feeder; a feed controller configured to control and monitor the additive feed system by: obtaining a primary measurement from the primary feeder: obtaining a secondary measurement from the secondary feeder: comparing the primary measurement and the secondary measurement; and (i) continuing dispensing the additive when the difference between the primary measurement and the secondary measurement is less than a selected threshold or (ii) halting dispensing the additive and recalibrating at least one of the primary feeder or the secondary feeder when the difference between the primary measurement and the secondary measurement is greater than the selected threshold.

Embodiments A and B may have one or more of the following additional elements in any combination:

Element 1: wherein the selected threshold is 5%.
Element 2: wherein the selected threshold is 10%.
Element 3: wherein the selected threshold is 15%.
Element 4: wherein obtaining the secondary measurement comprises obtaining a plurality of instantaneous secondary measurements each determined only during time periods of actively dispensing the additive from the secondary feeder to the primary feeder, and summing the instantaneous secondary measurements to determine a total weight loss in the secondary feeder for the time interval.
Element 5: wherein the time interval in Element 4 is 1 hour.
Element 6: wherein the additive feed system is feeding a continuous polymerization process.
Element 7: wherein the additive feed system is feeding a batch polymerization process.
Element 8: further comprising obtaining a tertiary measurement from a tertiary feeder that feeds the secondary feeder; and wherein comparing comprises comparing the primary measurement or secondary measurement to the tertiary measurement.
Element 9: Element 8, wherein obtaining the tertiary measurement comprises obtaining a plurality of instantaneous tertiary measurements each determined only during time periods of actively dispensing the additive from the tertiary feeder to the secondary feeder, and summing the instantaneous tertiary measurements to determine a total weight loss in the tertiary feeder for the time interval.
Element 10: wherein the primary measurement and the secondary measurement independently comprise a total additive concentration calculated as the weight loss of the feeder/total product weight.
Element 11: wherein either or both of the primary feeder and the secondary feeder is a gravimetric feeder.

By way of non-limiting example, exemplary combinations applicable to A and B include, but are not limited to, 1 and any one or more of 2 to 11; 2 and any one or more of 1 and 3 to 11; 3 and any one or more of 1 to 2 and 4 to 11; 4 and any one or more of 1 to 3 and 5 to 11; 5 and any one or more of 1 to 4 and 6 to 11; 6 and any one or more of 1 to 5 and 7 to 10; 7 and any one or more of 1 to 6 and 8 to 11; 8 and any one or more of 1 to 7 and 9 to 11; and 9 and any one or more of 1 to 8 and 10 to 11; 10 and any one or more of 1 to 9 and 11; 11 and any one or more of 1 to 10.

To facilitate a better understanding of the present disclosure, the following examples of preferred or representative embodiments are given. In no way should the following examples be read to limit, or to define, the scope of the invention.

## EXAMPLES

Example 1: Comparative Continuous Secondary Feeder Measurement

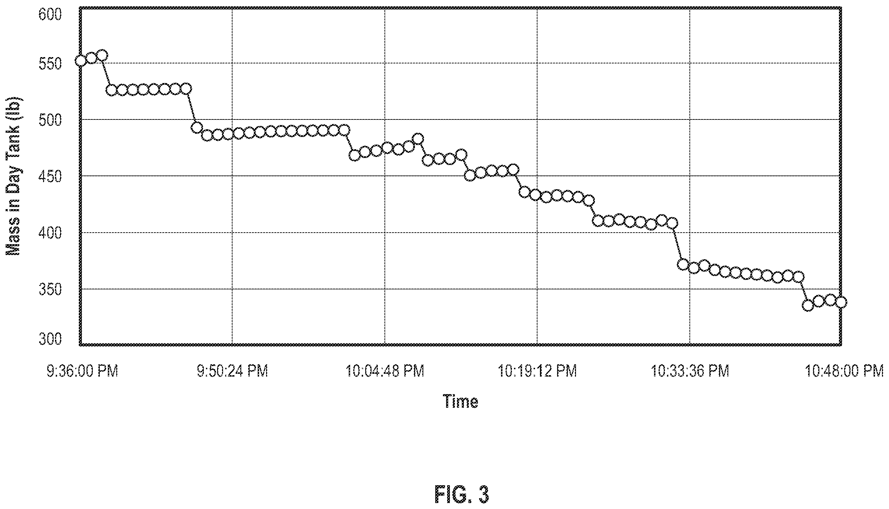

In the first example, the mass of a secondary feeder is calculated using a comparative method in which the mass is recorded continuously during use and plotted as a function of time, as shown in FIG. 3. During addition, the weight decreases in regular intervals, where each drop in weight represents a slide gate valve under the gravimetric tank opening to refill the primary feeder.

A comparative calculation was then used to determine the total weight decrease over the measured interval. In this example, the weight at 9:40 am (525 lb) is subtracted by the mass at 10:40 am (375 lb) to give a total weight of additive fed to a downstream mixing device of 150 lb. The 150 lb total weight assumes that the weigh cells of the secondary feeder are functioning properly and do not drift over the measured interval to introduce error.

Example 2: Secondary Feeder Measurement When Idle

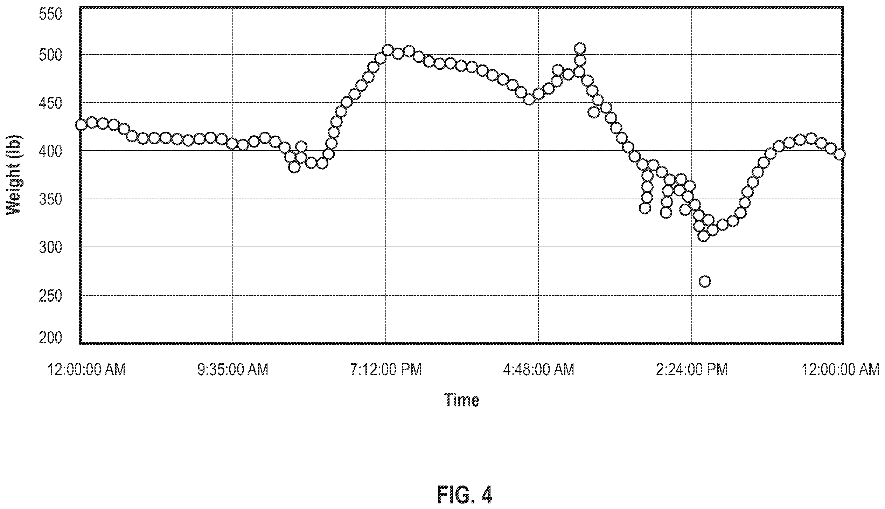

In this example, the same secondary feeder from Example 1 was measured while not in operation (*i.e.* no additive entering or exiting the hopper). The weight as a function of time over the measured interval is plotted in FIG. 4. The results indicate that the weight measurement drifts over about 200 lbs over the 24 hour period measured. The result indicates that continuous measurement modes would capture this systematic drift error, which can skew secondary measurements.

Example 3: Instantaneous Feeder Measurement During Use

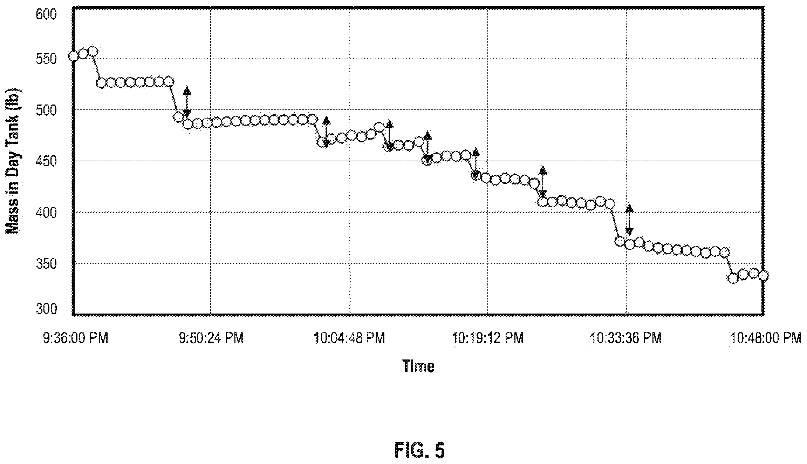

In this example, a secondary measurement was obtained using an instantaneous measurement method in accordance with the present disclosure. The instantaneous measurement was applied to the data obtained in Example 1 and the weight in the secondary feeder was plotted as a function of time as shown in Fig. 5.

All additive drops between the 9:40 and 10:40 time points (each represented by an up/down arrow below) were recorded as follows: 50 lb, 20 lb, 20 lb, 20 lb, 20 lb, 20 lb, and 50 lb. The total tank weight loss was determined by the sum of additive drops to give a total weight loss of 200 lb. The discrepancy between the two secondary measurements (150 lb of Example 1, as compared to 200 lb per this Example 3), indicates that the instantaneous measurement method ignores drift in weight cells introduced by larger time measurement frames. The reduced error in turn may enhance the sensitivity of the method to detect measurement errors when compared with primary measurements.

Therefore, the disclosed systems and methods are well adapted to attain the ends and advantages mentioned as well as those that are inherent therein. The particular embodiments disclosed above are illustrative only. as the teachings of the present disclosure may be modified and practiced in different but equivalent manners apparent to those skilled in the art having the benefit of the teachings herein.

**Claims**

1.    A method of dispensing an additive, comprising:

  dispensing an additive from a secondary feeder (108) to a primary feeder (102);
  dispensing the additive from the primary feeder (102) to a mixing device (106);
  obtaining a primary measurement from the primary feeder feeding the mixing device, wherein the primary measurement is a total weight of additive fed from the primary feeder (102) over a time interval; **characterised by**
  obtaining a secondary measurement from the secondary feeder (108) that feeds the primary feeder (102), wherein the secondary measurement is a total weight of additive fed from the secondary feeder over the time interval;
  comparing the primary measurement and the secondary measurement; and

    (i) when the difference between the primary measurement and the secondary measurement is less than a selected threshold, continuing either or both of

      (i-a) dispensing the additive from the primary feeder (102) to the mixing device (106) or
      (i-b) dispensing the additive from the secondary feeder (108) to the primary feeder (102); or

    (ii) when the difference between the primary measurement and the secondary measurement is greater than the selected threshold, halting either or both of

      (ii-a) dispensing the additive from the primary feeder (102) to the mixing device (106) or

(ii-b) dispensing the additive from the secondary feeder (108) to the primary feeder (102), and further recalibrating at least one of the primary feeder (102) or the secondary feeder (108).

2. An additive feed system (100) for dispensing an additive to a mixing device (106), comprising:

a primary feeder and a secondary feeder, wherein the secondary feeder (108) is configured to feed an additive to the primary feeder (102), wherein the primary feeder (102) is configured to feed the additive to the mixing device (106);
a feed controller (112) configured to control and monitor the additive feed system (100) by:

obtaining a primary measurement from the primary feeder (102); obtaining a secondary measurement from the secondary feeder (108);
comparing the primary measurement and the secondary measurement; and

(i) continuing dispensing the additive when the difference between the primary measurement and the secondary measurement is less than a selected threshold or
(ii) halting dispensing the additive and recalibrating at least one of the primary feeder (102) or the secondary feeder (108) when the difference between the primary measurement and the secondary measurement is greater than the selected threshold.

3. The method of claim 1 or system (100) of claim 2, wherein the selected threshold is 5%.

4. The method of claim 1 or system (100) of claim 2, wherein the selected threshold is 10%.

5. The method of claim 1 or system (100) of claim 2, wherein the selected threshold is 15%.

6. The method of any of claims 1 or 3 to 6 or the system (100) of any one of claims 2 to 6, wherein obtaining the secondary measurement comprises obtaining a plurality of instantaneous secondary measurements each determined only during time periods of actively dispensing the additive from the secondary feeder (108) to the primary feeder (102), and summing the instantaneous secondary measurements to determine a total weight loss in the secondary feeder (108) for the time interval.

7. The method or system (100) of claim 6, wherein the time interval is 1 hour.

8. The method of any one of claims 1 or 3 to 7 or the system (100) of any one of claims 2 to 7, wherein the additive feed system (100) is feeding a continuous polymerization process.

9. The method of any one of claims 1 or 3 to 8 or the system (100) of any one of claims 2 to 8, wherein the additive feed system (100) is feeding a batch polymerization process.

10. The method of any one of claims 1 or 3 to 9 or the system (100) of any one of claims 2 to 9, further comprising obtaining a tertiary measurement from a tertiary feeder that feeds the secondary feeder (108); and wherein comparing comprises comparing the primary measurement or secondary measurement to the tertiary measurement.

11. The method or system (100) of claim 10, wherein obtaining the tertiary measurement comprises obtaining a plurality of instantaneous tertiary measurements each determined only during time periods of actively dispensing the additive from the tertiary feeder to the secondary feeder (108), and summing the instantaneous tertiary measurements to determine a total weight loss in the tertiary feeder for the time interval.

12. The method of any one of claims 1 or 3 to 11 or the system (100) of any one of claims 2 to 11, wherein the primary measurement and the secondary measurement independently comprise a total additive concentration calculated as the weight loss of the feeder/total product weight.

13. The method of any one of claims 1 or 3 to 12 or the system (100) of any one of claims 3 to 12, wherein either or both of the primary feeder (102) and the secondary feeder (108) is a gravimetric feeder.

**Patentansprüche**

1. Verfahren zum Zuführen eines Additives, umfassend:

   Zuführen eines Additives von einer Sekundärzuführung (108) an eine Primärzuführung (102);
   Zuführen des Additivs von der Primärzuführung (102) an eine Mischvorrichtung (106);
   Erhalten einer Primärmessung von der Primärzuführung, die die Mischvorrichtung speist, wobei die Primärmessung ein Gesamtgewicht des von der Primärzuführung (102) über ein Zeitintervall zugeführten Additivs ist;
   **gekennzeichnet durch**
   Erhalten einer Sekundärmessung von der Sekundärzuführung (108), die die Primärzuführung (102) speist, wobei die Sekundärmessung ein Gesamtgewicht des von der Sekundärzuführung über das Zeitintervall zugeführten Additivs ist;
   Vergleichen der Primärmessung und der Sekundärmessung; und

   (i) wenn die Differenz zwischen der Primärmessung und der Sekundärmessung kleiner als ein ausgewählter Schwellenwert ist, Fortsetzen einer oder beider der folgenden Maßnahmen

   (i-a) Zuführen des Additivs von der Primärzuführung (102) an die Mischvorrichtung (106) oder
   (i-b) Zuführen des Additivs von der Sekundärzuführung (108) an die Primärzuführung (102); oder

   (ii) wenn die Differenz zwischen der Primärmessung und der Sekundärmessung größer ist als der ausgewählte Schwellenwert, Anhalten einer oder beider der folgenden Maßnahmen

   (ii-a) Zuführen des Additivs von der Primärzuführung (102) an die Mischvorrichtung Gerät (106) oder
   (ii-b) Abgeben des Additivs von der Sekundärzuführung (108) an die Primärzuführung (102); und weiterhin Rekalibrieren mindestens einer der Primärzuführung (102) oder der Sekundärzuführung (108).

2. Additivzufuhrsystem (100) zum Zuführen eines Additivs an eine Mischvorrichtung (106), umfassend:

   eine Primärzuführung und eine Sekundärzuführung; wobei die Sekundärzuführung (108) so konfiguriert ist, dass sie der Primärzuführung (102) ein Additiv zuführt, wobei die Primärzuführung (102) so konfiguriert ist, dass sie das Additiv der Mischvorrichtung (106) zuführt;
   eine Zufuhrsteuerung (112), die so konfiguriert ist, dass sie das Additivzufuhrsystem (100) steuert und überwacht, indem sie:
   eine Primärmessung von der Primärzuführung (102) erhält; eine Sekundärmessung von der Sekundärzuführung (108) erhält; Primärmessung und Sekundärmessung vergleicht; und

   (i) Zuführen des Additivs fortsetzt, wenn die Differenz zwischen der Primärmessung und der Sekundärmessung kleiner als ein ausgewählter Schwellenwert ist, oder
   (ii) Zuführen des Additivs unterbricht und mindestens einer der Primärzuführung (102) oder der Sekundärzuführung (108) neu kalibriert, wenn die Differenz zwischen der Primärmessung und der Sekundärmessung größer ist als der ausgewählte Schwellenwert.

3. Verfahren nach Anspruch 1 oder System (100) nach Anspruch 2, wobei der ausgewählte Schwellenwert 5 % beträgt.

4. Verfahren nach Anspruch 1 oder System (100) nach Anspruch 2, wobei der ausgewählte Schwellenwert 10 % beträgt.

5. Verfahren nach Anspruch 1 oder System (100) nach Anspruch 2, wobei der ausgewählte Schwellenwert 15 % beträgt.

6. Verfahren nach einem der Ansprüche 1 oder 3 bis 5 oder System (100) nach einem der Ansprüche 2 bis 5, wobei das Erhalten der Sekundärmessung das Erhalten einer Vielzahl von unmittelbaren Sekundärmessungen, die jeweils nur während Zeitperioden der aktiven Zufuhr des Additivs von der Sekundärzuführung (108) an die Primärzuführung (102) bestimmt werden, und das Summieren der unmittelbaren Sekundärmessungen umfasst, um einen Gesamtgewichtsverlust in der Sekundärzuführung (108) für das Zeitintervall zu bestimmen.

7. Verfahren oder System (100) nach Anspruch 6, wobei das Zeitintervall 1 Stunde beträgt.

8. Verfahren nach einem der Ansprüche 1 oder 3 bis 7 oder System (100) nach einem der Ansprüche 2 bis 7, wobei das Additivzufuhrsystem (100) einen kontinuierlichen Polymerisationsprozess speist.

9. Verfahren nach einem der Ansprüche 1 oder 3 bis 8 oder System (100) nach einem der Ansprüche 2 bis 8, wobei das Additivzufuhrsystem (100) einen Chargen-Polymerisationsprozess speist.

10. Verfahren nach einem der Ansprüche 1 oder 3 bis 9 oder das System (100) nach einem der Ansprüche 2 bis 9 weiterhin umfassend: Erhalten einer Tertiärmessung von einer Tertiärzuführung, die die Sekundärzuführung (108) speist; und wobei der Vergleich den Vergleich der Primärmessung oder der Sekundärmessung mit der Tertiärmessung umfasst.

11. Verfahren oder System (100) nach Anspruch 10, wobei das Erhalten der Tertiärmessung das Erhalten einer Vielzahl von unmittelbaren Tertiärmessungen, die jeweils nur während Zeitperioden der aktiven Zufuhr des Additivs von der Tertiärzuführung an die Sekundärzuführung (108) bestimmt werden, und das Summieren der unmittelbaren Tertiärmessungen umfasst, um einen Gesamtgewichtsverlust in der Tertiärzuführung für das Zeitintervall zu bestimmen.

12. Verfahren nach einem der Ansprüche 1 oder 3 bis 11 oder System (100) nach einem der Ansprüche 2 bis 11, wobei die Primärmessung und die Sekundärmessung unabhängig voneinander eine Gesamtadditivkonzentration umfassen, die als Gewichtsverlust des Speisers/Gesamtproduktgewicht berechnet wird.

13. Verfahren nach einem der Ansprüche 1 oder 3 bis 12 oder System (100) nach einem der Ansprüche 3 bis 12, wobei entweder die Primärzuführung (102) oder die Sekundärzuführung (108) oder beide eine gravimetrische Zuführung sind.

## Revendications

1. Procédé de distribution d'un additif, comprenant :

la distribution d'un additif depuis un dispositif d'alimentation secondaire (108) à un dispositif d'alimentation principal (102) ;
la distribution de l'additif depuis le dispositif d'alimentation principal (102) à un dispositif de mélange (106) ;
l'obtention d'une mesure principale à partir du dispositif d'alimentation principal alimentant le dispositif de mélange, la mesure principale étant un poids total d'additif fourni depuis le dispositif d'alimentation principal (102) sur un intervalle de temps ; **caractérisé par**
l'obtention d'une mesure secondaire à partir du dispositif d'alimentation secondaire (108) qui alimente le dispositif d'alimentation principal (102), la mesure secondaire étant un poids total d'additif fourni depuis le dispositif d'alimentation secondaire sur l'intervalle de temps ;
la comparaison de la mesure principale et de la mesure secondaire ; et

(i) quand la différence entre la mesure principale et la mesure secondaire est inférieure à un seuil sélectionné, la poursuite de

(i-a) la distribution de l'additif depuis le dispositif d'alimentation principal (102) au dispositif de mélange (106) et/ou de
(i-b) la distribution de l'additif depuis le dispositif d'alimentation secondaire (108) au dispositif d'alimentation principal (102) ; ou

(ii) quand la différence entre la mesure principale et la mesure secondaire est supérieure au seuil sélectionné, l'interruption de

(ii-a) la distribution de l'additif depuis le dispositif d'alimentation principal (102) au dispositif de mélange (106) et/ou de
(ii-b) la distribution de l'additif depuis le dispositif d'alimentation secondaire (108) au dispositif d'alimentation principal (102), et, en outre, le réétalonnage du dispositif d'alimentation principal (102) et/ou du dispositif d'alimentation secondaire (108).

2. Système d'alimentation en additif (100) pour la distribution d'un additif à un dispositif de mélange (106), comprenant :

un dispositif d'alimentation principal et un dispositif d'alimentation secondaire, le dispositif d'alimentation secondaire (108) étant conçu pour alimenter avec un additif le dispositif d'alimentation principal (102), le dispositif d'alimentation principal (102) étant conçu pour alimenter avec l'additif le dispositif de mélange (106) ;
un contrôleur d'alimentation (112) conçu pour contrôler et surveiller le système d'alimentation en additif (100) :

en obtenant une mesure principale à partir du dispositif d'alimentation principal (102) ; en obtenant une mesure secondaire à partir du dispositif d'alimentation secondaire (108) ;
en comparant la mesure principale et la mesure secondaire ; et

(i) en poursuivant la distribution de l'additif quand la différence entre la mesure principale et la mesure secondaire est inférieure à un seuil sélectionné ou
(ii) en interrompant la distribution de l'additif et en réétalonnant le dispositif d'alimentation principal (102) et/ou le dispositif d'alimentation secondaire (108) quand la différence entre la mesure principale et la mesure secondaire est supérieure au seuil sélectionné.

3.  Procédé selon la revendication 1 ou système (100) selon la revendication 2, dans lesquels le seuil sélectionné est de 5 %.

4.  Procédé selon la revendication 1 ou système (100) selon la revendication 2, dans lesquels le seuil sélectionné est de 10 %.

5.  Procédé selon la revendication 1 ou système (100) selon la revendication 2, dans lesquels le seuil sélectionné est de 15 %.

6.  Procédé selon l'une quelconque des revendications 1 ou 3 à 6 ou système (100) selon l'une quelconque des revendications 2 à 6, dans lesquels l'obtention de la mesure secondaire comprend l'obtention d'une pluralité de mesures secondaires instantanées toutes déterminées uniquement pendant des périodes de distribution active de l'additif depuis le dispositif d'alimentation secondaire (108) au dispositif d'alimentation principal (102), et la sommation des mesures secondaires instantanées pour déterminer une perte de poids totale dans le dispositif d'alimentation secondaire (108) pendant l'intervalle de temps.

7.  Procédé ou système (100) selon la revendication 6, dans lesquels l'intervalle de temps est égal à 1 heure.

8.  Procédé selon l'une quelconque des revendications 1 ou 3 à 7 ou système (100) selon l'une quelconque des revendications 2 à 7, le système d'alimentation en additif (100) alimentant un processus de polymérisation continu.

9.  Procédé selon l'une quelconque des revendications 1 ou 3 à 8 ou système (100) selon l'une quelconque des revendications 2 à 8, le système d'alimentation en additif (100) alimentant un processus de polymérisation discontinu.

10. Procédé selon l'une quelconque des revendications 1 ou 3 à 9 ou système (100) selon l'une quelconque des revendications 2 à 9, comprenant en outre l'obtention d'une mesure tertiaire à partir d'un dispositif d'alimentation tertiaire qui alimente le dispositif d'alimentation secondaire (108) ; et dans lesquels la comparaison comprend la comparaison de la mesure principale ou de la mesure secondaire à la mesure tertiaire.

11. Procédé ou système (100) selon la revendication 10, dans lesquels l'obtention de la mesure tertiaire comprend l'obtention d'une pluralité de mesures tertiaires instantanées toutes déterminées uniquement pendant des périodes de distribution active de l'additif depuis le dispositif d'alimentation tertiaire au dispositif d'alimentation secondaire (108), et la sommation des mesures tertiaires instantanées pour déterminer une perte de poids totale dans le dispositif d'alimentation tertiaire pendant l'intervalle de temps.

12. Procédé selon l'une quelconque des revendications 1 ou 3 à 11 ou système (100) selon l'une quelconque des revendications 2 à 11, dans lesquels la mesure principale et la mesure secondaire comprennent indépendamment une concentration totale d'additif calculée comme la perte de poids du dispositif d'alimentation divisée par le poids total de produit.

13. Procédé selon l'une quelconque des revendications 1 ou 3 à 12 ou système (100) selon l'une quelconque des revendications 3 à 12, dans lesquels le dispositif d'alimentation principal (102) et/ou le dispositif d'alimentation secondaire (108) sont des dispositifs d'alimentation gravimétrique.

FIG. 1

200 —

**202**
Obtaining a primary measurement from a primary gravimetric feeder feeding a mixing device

**204**
Obtaining a secondary measurement from a secondary gravimetric feeder that feeds the primary feeder

**206**
Comparing the primary measurement and the secondary measurement

**208**
Continuing dispensing the additive when the difference is below a selected threshold

**210**
Halting dispensing the additive and recalibrating when the difference is greater than the selected threshold

FIG. 2

**FIG. 3**

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63261047
- US 4443995 A
- US 20040002789 A
- EP 1327867 A
- CN 102861529
- WO 201040615 A
- CN 109733831
- CN 109462217
- WO 2007104827 A
- US 4667503 A